# EUROPEAN PATENT SPECIFICATION

(11) **EP 2 238 642 B1**
(45) Date of publication and mention of the grant of the patent: **19.09.2012**
(21) Application number: 09704835.9
(22) Date of filing: 23.01.2009
(51) Int. Cl.: H01M 8/18, H01M 8/10

(54) **REDOX FUEL CELLS**
REDOX-BRENNSTOFFZELLEN
PILES À COMBUSTIBLE RÉDOX

(30) Priority: 23.01.2008 GB 0801195
(43) Date of publication of application: 13.10.2010
(73) Proprietor: Acal Energy Limited, Runcorn Cheshire WA7 4QX (GB)
(72) Inventor: KNUCKEY, Kathryn, Lancashire L40 5UY (GB); ROCHESTER, David, Tyne&Wear DH5 0EX (GB)
(74) Representative: Brand, Thomas Louis
(86) International application number: PCT/GB2009/050066
(87) International publication number: WO 2009/093081

(56) References cited:
- WO-A-2006/097438
- WO-A-2008/009992
- JP-A- 5 295 578
- US-A1- 2005 158 618
- US-A1- 2007 131 546

## Description

The present invention relates to fuel cells, in particular to indirect or redox fuel cells which have applications as power sources for: portable products such as portable electronics products; for transport vehicles such as automobiles, both main and auxiliary; auxiliary power for caravans and other recreational vehicles, boats etc; stationary uses such as uninterruptible power for hospitals computers etc and combined heat and power for homes and businesses. The invention also relates to certain catholyte solutions for use in such fuel cells.

Fuel cells have been known for portable applications such as automotive and portable electronics technology for very many years, although it is only in recent years that fuel cells have become of serious practical consideration. In its simplest form, a fuel cell is an electrochemical energy conversion device that converts fuel and oxidant into reaction product(s), producing electricity and heat in the process. In one example of such a cell, hydrogen is used as fuel, and air or oxygen as oxidant and the product of the reaction is water. The gases are fed respectively into catalysing, diffusion-type electrodes separated by a solid or liquid electrolyte which carries electrically charged particles between the two electrodes. In an indirect or redox fuel cell, the oxidant (and/or fuel in some cases) is not reacted directly at the electrode but instead reacts with the reduced form (oxidized form for fuel) of a redox couple to oxidise it, and this oxidised species is fed to the cathode (anode for fuel).

There are several types of fuel cell characterised by their different electrolytes. The liquid electrolyte alkali electrolyte fuel cells have inherent disadvantages in that the electrolyte dissolves CO₂ and needs to be replaced periodically. Polymer electrolyte or PEM-type cells with proton-conducting solid cell membranes are acidic and avoid this problem. However, it has proved difficult in practice to attain power outputs from such systems approaching the theoretical maximum level, due to the relatively poor electrocatalysis of the oxygen reduction reaction.

In addition expensive noble metal electrocatalysts are often used. It would be preferable to use a less costly inert electrode, such as one formed of or coated with carbon, nickel or titanium. However, prior art cells in which inert electrodes have been utilised have produced unsatisfactory power output.

Many current fuel cell technologies employ cathodes where oxygen gas is flowed directly to the electrode where it then reacts with a catalyst to produce water. In many cases the catalyst employed is platinum, a precious metal. Not only does this increase the costs of the overall fuel cell, but the inefficiency of the reaction leads to a loss in available power.

US-A-3152013 discloses a gaseous fuel cell comprising a cation-selective permeable membrane, a gas permeable catalytic electrode and a second electrode, with the membrane being positioned between the electrodes and in electrical contact only with the gas permeable electrode. The electrodes are formed of platinum, iridium or other noble metal electrocatalysts. An aqueous catholyte is provided in contact with the second electrode and the membrane, the catholyte including an oxidant couple therein. Means are provided for supplying a fuel gas to the permeable electrode, and for supplying a gaseous oxidant to the catholyte for oxidising reduced oxidant material. The preferred catholyte and redox couple is HBr/KBr/Br₂. Nitrogen oxide is disclosed as a preferred catalyst for oxygen reduction, but with the consequence that pure oxygen was required as oxidant, the use of air as oxidant requiring the venting of noxious nitrogen oxide species.

An acknowledged problem concerning electrochemical fuel cells is that the theoretical potential of a given electrode reaction under defined conditions can be calculated but never completely attained. Imperfections in the system inevitably result in a loss of potential to some level below the theoretical potential attainable from any given reaction. Previous attempts to reduce such imperfections include the selection of mediators which undergo oxidation-reduction reactions in the catholyte solution. For example, US-A-3294588 discloses the use of quinones and dyes in this capacity. However, despite the electrodes being coated with platinum, relatively low output was obtained during running of the cell. Another redox couple which has been tried is the vanadate/vanadyl couple, as disclosed in US-A-3279949. In this case, the slow rate of reduction and oxidation of the vanadium couple reduces its performance. This problem is exacerbated by the insolubility of the vanadium couple. The same vanadium couple was used in US4396687.

According to US-A-3540933, certain advantages could be realised in electrochemical fuel cells by using the same electrolyte solution for both catholyte and anolyte. This document discloses the use of a liquid electrolyte containing more than two redox couples therein, with equilibrium potentials not more than 0.8V apart from any other redox couple in the electrolyte.

The matching of the redox potentials of different redox couples in the electrolyte solution is also considered in US-A-3360401, which concerns the use of an intermediate electron transfer species to increase the rate of flow of electrical energy from a fuel cell. The use of platinum coated electrodes is also disclosed.

W02006/097438 discloses a redox fuel cell comprising an anode and a cathode separated by an ion selective polymer electrolyte-membrane, the cathode comprising a cathodic material and a proton-conducting polymeric material.

US2007/0131546A1 discloses an enzyme electrode which can be used as a sensor with high sensitivity, and for other uses, having a conductive baseplate and a fusion protein immobilised to the conductive baseplate.

US2005/0158618A1 discloses a battery comprising a first compartment and a second compartment, and a barrier separating the compartments, the barrier comprising a proton transporting moiety.

JP05295578A discloses a method for obtaining a partially oxidised aromatic compound by adding a metallic complex soluble in the compound in a fuel cell system.

US 3607420 discloses an electrolyte in which the only soluble redox species present is the catalyst species. The electrolyte comprises a Cu^{(I)}/Cu^{(II)} catalyst.

WO-A-2006/057387 discloses a bio fuel cell making use of a material which participates in the donation and receiving of electrons, the cell being said to exhibit an enhanced output power density. The material comprises an electron conductor of a specified external surface area, a redox polymer and a bio catalyst.

US-A-2003/0152823 discloses a fuel cell having an anode and a cathode with an anode enzyme disposed on the anode and a cathode enzyme disposed on the cathode.

US-A-2001/0028977 discloses a method for preparing a high energy density electrolyte solution for use in ore-vanadium redox cells.

Prior art fuel cells all suffer from one or more of the following disadvantages:
They are inefficient; they are expensive and/or expensive to assemble; they use expensive and/or environmentally unfriendly materials; they yield inadequate and/or insufficiently maintainable current densities and/or cell potentials; they are too large in their construction; they operate at too high a temperature; they produce unwanted by-products and/or pollutants and/or noxious materials; they have not found practical, commercial utility in portable applications such as automotive and portable electronics.

It is an object of the present invention to overcome or ameliorate one or more of the aforesaid disadvantages. It is a further object of the present invention to provide an improved catholyte solution for use in redox fuel cells.

WO2008/009992 describes the use of modified ferrocene species as effective mediators in PEM fuel cells. Ferrocene itself is not ideally suited to this purpose as it is uncharged, insufficiently soluble and the Fe(III) form has a positive charge which makes it unsuitable for use in PEM fuel cells employing a cation exchange membrane. WO 2008/009 992 describes the chemical modification of ferrocene to improve its solubility and allow the charge of the species to be manipulated.

If the ferrocene species is to be used in a catholyte in a PEM fuel cell comprising a cation exchange membrane, it will preferably be non-ionic in its oxidised form, or more preferably anionic. WO 2008/009 992 discloses that anionic charge can be introduced by modifying ferrocene with anionic charge inducing groups such as carboxylate, phosphate or phosphonate groups. Stronger acid groups such as sulphonate and sulphate can also be introduced.

Alternatively, when the modified ferrocene species is to be used as a catholyte in a PEM cell comprising a anion exchange membrane, it will preferably be non-ionic in its reduced form, or more preferably, cationic. WO 2008/009 992 discloses that cationic charge can be introduced to ferrocene by modifying it with cationic charge inducing groups such as protonated amines or quaternary amine groups.

It would however be desirable to extend the lifetime of the oxidised form of some ferrocene-based mediators. This would increase the stability and lifetime of the ferrocene species in the catholyte and the number of times it can be repeatedly oxidised and reduced without having to be replaced.

Accordingly, the present invention provides a redox fuel cell comprising an anode and a cathode separated by a ion selective polymer electrolyte membrane; means for supplying a fuel to the anode region of the cell; means for supplying an oxidant to the cathode region of the cell; means for providing an electrical circuit between the anode and the cathode; a catholyte solution comprising at least one non-volatile catholyte component flowing in fluid communication with the cathode, the catholyte solution comprising a modified ferrocene species comprising at least one bridging unit between the cyclopentadienyl rings, the modified ferrocene species being at least partially reduced at the cathode in operation of the cell, and at least partially regenerated by reaction with the oxidant after such reduction at the cathode by direct reaction with the oxidant, or by indirect reaction therewith using a redox catalyst catalysing the regeneration of the ferrocene mediator.

The use of modified ferrocenes with bridging units between the cyclopentadienyl rings can provide access to mediators with increased stability. The ferrocene bridging unit increases the likelihood of reversible redox behaviour over alternative reaction pathways.

Furthermore, the bridging unit provides extra sites for the incorporation of functional groups which can tailor potential, aid solubility and/or manipulate the overall charge on the complex.

In one preferred form of fuel cell in accordance with the invention, the modified ferrocene species may be represented by the formula: 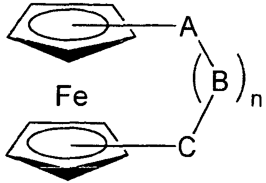 wherein:
A-(B)*ₙ*-C together comprise a divalent heteroannular bridging group; and n is from 1 to 6.

The divalent heteroannular bridging group may be selected for example from optionally substituted straight or branched chain C₁-C₂₀ alkylidene, C₂-C₂₀ alkenylidene, C₃-C₂₀ cycloalkylidene, C₆-C₂₀ arylidene, C₇-C₂₀ lkylarylidene, or C₇-C₂₀ arylalkylidene radicals optionally containing one or more heteroatoms. Heteroatoms when present may be selected from oxygen, nitrogen, phosphorus and sulphur, for example.

A, B¹ - B⁶ and C are independently selected from carbon, sulphur, oxygen, nitrogen and phosphorus and from functional groups comprising one or more of those atoms;

The number of bridging units (A-(B)ₙ-C) between the cyclopentadienyl rings can be between 1 and 5. In each case *n* can be between 1 and 6. Preferably the number of bridging units should be 1-3, more preferably 2-3. Each bridging unit (A-(B)ₙ-C) may be the same or different.

Preferably *n* will be 1-3, more preferably 1-2.

Identity of the atoms A, B, and C, and further progressions of atoms which may be labelled as B¹, B², B³...*etc*. may or may not be carbon, sulphur, oxygen, nitrogen, phosphorous and functional groups comprising these atoms. The identity of the atoms A, B¹, B², B³, B⁴, B⁵, B⁶ and C may or may not be identical but never mutually exclusive.

The or each bridging unit A-(B)ₙ-C may be the same or different, and -A-, -B¹-, -B²-, -B³-, -B⁴-, -B⁵-, -B⁶- and -C- are preferably independently selected from compatible combinations of substituted and unsubstituted, branched-and straight-chain -(CH₂)-, -CH(alkyl)-, -C(alkyl)₂-, -CH(alkenyl)-, -C(alkenyl)₂-, -CH(alkynyl)-, -C(alkynyl)₂-, CH(aryl), CH(heteroaryl), -O-, -S-, -(NH)-, - N(alkyl)-, -CH(OH)-, -CH(O-alkyl)-, -C(=O)-, -C-O-C(=O)- or -O-C(=O)-OR-C(=O)-O-.

The ferrocene bridging units A, B, and C, may carry further substituent groups which are independently selected from hydrogen and from functional groups comprising halogen, hydroxy, amino, protonated amino, imino, nitro, cyano, acyl, acyloxy, sulphate, sulphonyl, sulphinyl, alkylamino, protonated alkylamino, quaternary alkylammonium, carboxy, carboxylic acid, ester, ether, amido, sulphonate, sulphonic acid, sulphonamide, phosphonic acid, phosphonate, phosphate, alkylsulphonyl, arylsulphonyl, alkoxycarbonyl, alkylsulphinyl, alkylthio, arylthio, alkyl, alkoxy, oxyester, oxyamido, aryl, arylamino, aryloxy, heterocycloalkyl, heteroaryl, (C2-C5)alkenyl, (C2-C5)alkynyl, azido, phenylsulphonyloxy or amino acid conjugates having the formula -CO-W-OH, where W is an amino acid , and from alkyl, alkenyl, aryl, cycloalkyl, alkaryl, alkenaryl, aralkyl, aralkenyl groups substituted with one ore more of the aforesaid functional groups.

Especially preferred substituents include fluoro, hydroxy, amino, protonated amino, nitro, alkylamino, protonated alkylamino, quaternary alkylammonium, carboxylic acid, sulphonate, sulphonic acid, phosphonic acid, phosphonate, and from alkyl, alkenyl, aryl, cycloalkyl, alkaryl, alkenaryl, aralkyl, aralkenyl groups substituted with one or more of the aforesaid functional groups.

The or each bridging unit may be further branched and/or extended at any bridging atom on any bridge by any suitable number of spacer and/or functional groups, for example, alkyl, alkenyl, aryl, heteroaryl, cycloalkyl, alkaryl, alkenaryl, acetylene . The spacer group may also be a straight or branched and a combination of the aforesaid units.

Each bridging unit A, Bⁿ and C may bear any number of substituents and in each case these substituents may be the same of different.

Any ferrocene site without heteroannular bridging units attached may be independently substituted with hydrogen or with functional groups comprising halogen, hydroxy, amino, imino, nitro, cyano, acyl, acyloxy, sulphate, sulphonyl, sulphinyl, alkylamino, carboxy, carboxylic acid, ester, ether, amido, sulphonate, sulphonic acid, sulphonamide, phosphonic acid, phosphonate, phosphate, alkylsulphonyl, arylsulphonyl, alkoxycarbonyl, alkylsulphinyl, arylsulphinyl, alkylthio, arylthio, alkyl, alkoxy, oxyester, oxyamido, aryl, arylamino, aryloxy, heterocycloalkyl, heteroaryl, (C₂-C₅)alkenyl, (C₂-C₅)alkynyl, azido phenylsulphonyloxy or amino acid conjugates having the formula -CO-W-OH, where W is an amino acid, and from alkyl, alkenyl, aryl, cycloalkyl, alkaryl, alkenaryl, aralkyl, aralkenyl groups substituted with one or more of the aforesaid functional groups.

Especially preferred substituents include fluoro, hydroxy, amino, protonated amino, nitro, alkylamino, protonated alkylamino, quaternary alkylammonium, carboxylic acid, sulphonate, sulphonic acid, phosphonic acid, phosphonate, and from alkyl, alkenyl, aryl, cycloalkyl, alkaryl, alkenaryl, aralkyl, aralkenyl groups substituted with one or more of the aforesaid functional groups.

Examples of such modified ferrocene species for use in the fuel cell of the invention include:

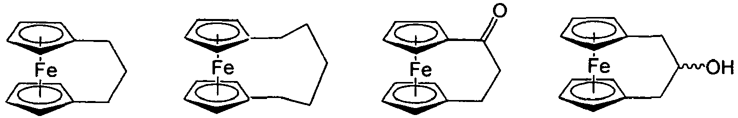

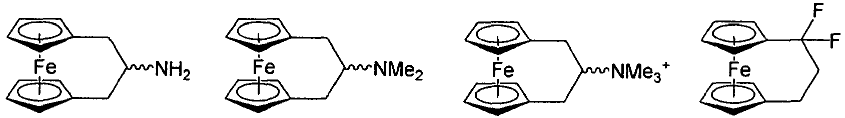

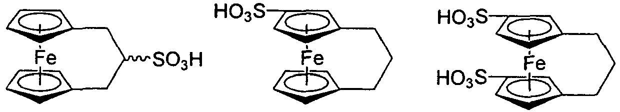

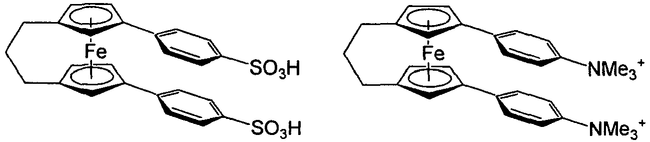

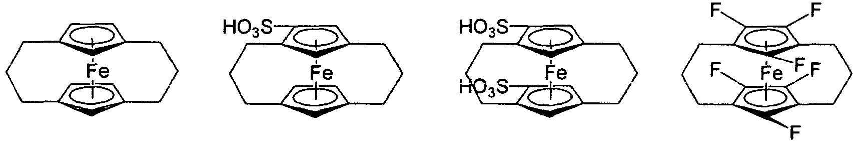

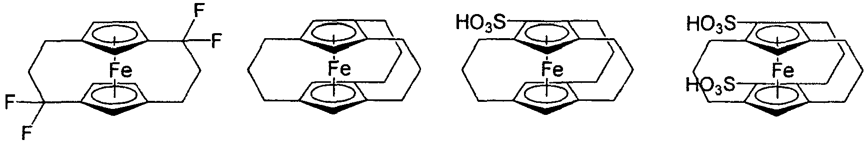

Thus, it can be seen that it is possible to introduce one or more divalent heteroannular bridging units to increase the stability of ferrocene mediator species. Additionally, the charge carried on the modified ferrocene species of the present invention can be easily modified to allow the ferrocene properties to be tailored to the particular conditions of the cell with which it is to be used. For example, it can be tailored to the pH of the catholyte, and the charge of the exchangeable ions in the membrane. Furthermore, the introduction of either electron donating substituents or electron withdrawing substituents to either the cyclopentadienyl rings or the bridge itself can be used to tailor the redox potential of the ferrocene species.

Also provided in accordance with the invention is a catholyte solution for use in such a redox fuel cell.

The concentration of the modified ferrocene species in the catholyte solution is preferably at least about 0.0001 M, more preferably at least about 0.005M, and most preferably at least about 0.001 M.

In one preferred embodiment of the invention, the ion selective PEM is a cation selective membrane which is selective in favour of protons versus other cations. In cases where the PEM is a cation selective membrane, the pH of the catholyte is preferably below 7, more preferably below 4, even more preferably below 2 and most preferably below 1.

The cation selective polymer electrolyte membrane may be formed from any suitable material, but preferably comprises a polymeric substrate having cation exchange capability. Suitable examples include fluororesin-type ion exchange resins and non-fluororesin-type ion exchange resins. Fluororesin-type ion exchange resins include perfluorocarboxylic acid resins, perfluorosulphonic acid resins, and the like. Perfluorocarboxylic acid resins are preferred, for example "Nafion" (Du Pont Inc.), "Flemion" (Asahi Gas Ltd),"Aciplex" (Asahi Kasei Inc), and the like. Non-fluororesin-type ion exchange resins include polyvinyl alcohols, polyalkylene oxides, styrenedivinylbenzene ion exchange resins, and the like, and metal salts thereof. Preferred non-fluororesin-type ion exchange resins include polyalkylene oxide-alkali metal salt complexes. These are obtainable by polymerizing an ethylene oxide oligomer in the presence of lithium chlorate or another alkali metal salt, for example. Other examples include phenolsulphonic acid, polystyrene sulphonic, polytriflurostyrene sulphonic, sulphonated trifluorostyrene, sulphonated copolymers based on α,β,β-triflurostyrene monomer, radiation-grafted membranes. Non-fluorinated membranes include sulphonated poly(phenylquinoxalines), poly (2,6 diphenyl-4-phenylene oxide), poly(arylether sulphone), poly(2,6-diphenylenol); acid-doped polybenzimidazole, sulphonated polyimides; styrenelethylene-butadiene/styrene triblock copolymers; partially sulphonated polyarylene ether sulphone; partially sulphonated polyether ether ketone (PEEK); and polybenzyl suphonic acid siloxane (PBSS).

In embodiments in which the polymer electrode membrane is anion specific, it is preferred that the catholyte solution have a pH of above 7. In a more preferred embodiment, the catholyte has a pH of above 8.

In some cases it may be desirable for the ion selective polymer electrolyte membrane to comprise a bi-membrane. The bimembrane if present will generally comprise a first cation selective membrane and a second anion selective membrane. In this case the bimembrane may comprise an adjacent pairing of oppositely charge selective membranes. For example the bi-membrane may comprise at least two discreet membranes which may be placed side-by-side with an optional gap therebetween. Preferably the size of the gap, if any, is kept to a minimum in the redox cell of the invention. The use of a bi-membrane may be used in the redox fuel cell of the invention to maximise the potential of the cell, by maintaining the potential due to a pH drop between the anode and catholyte solution. Without being limited by theory, in order for this potential to be maintained in the membrane system, at some point in the system, protons must be the dominant charge transfer vehicle. A single cation-selective membrane may not achieve this to the same extent due to the free movement of other cations from the catholyte solution in the membrane.

In this case the cation selective membrane may be positioned on the cathode side of the bimembrane and the anion selective membrane may be positioned on the anode side of the bimembrane. In this case, the cation selective membrane is adapted to allow protons to pass through the membrane from the anode side to the cathode side thereof in operation of the cell. The anion selective membrane is adapted substantially to prevent cationic materials other than protons from passing therethrough from the cathode side to the anode side thereof. In this case protons may pass from anode to cathode.

In a second embodiment of the invention the cation selective membrane is positioned on the anode side of the bimembrane and the anion selective membrane is positioned on the cathode side of the bi-membrane. In this case, the cation selective membrane is adapted to allow protons to pass through the membrane from the anode side to the cathode side thereof in operation of the cell. In this case, anions can pass from the cathode side into the interstitial space of the bimembrane, and protons will pass from the anode side. It may be desirable in this case to provide means for flushing such protons and anionic materials from the interstitial space of the bimembrane. Such means may comprises one or more perforations in the cation selective membrane, allowing such flushing directly through the membrane. Alternatively means may be provided for channelling flushed materials around the cation selective membrane from the interstitial space to the cathode side of the said membrane.

A representative example of a useful bipolar membrane, the arrangement used with the anionic-selective membrane on the anode side is that sold under the trademark Neosepta(R) BP-1, available from Tokuyama Corporation.

According to another aspect of the present invention, there is provided a method of operating a ion exchange membrane fuel cell comprising the steps of:
a) forming H⁺ ions at an anode situated adjacent to an ion exchange membrane;
b) supplying the catholyte of the invention with its modified ferrocene species in an oxidised state to a cathode situated oppositely adjacent to the ion exchange membrane; and
c) allowing the modified ferrocene species to become reduced upon contact with the cathode concomitantly with H⁺ ions passing through the membrane to balance charge.

In another embodiment, the catholyte is supplied from a catholyte reservoir.

The method of the above aspect may additionally comprise the step of:
d) passing the catholyte from the cathode to a reoxidation zone wherein the modified ferrocene species is reoxidised by the catalyst reacting with the oxidant.

In another embodiment, the method of the above aspect comprises the step of:
e) passing the catholyte from the reoxidation zone to the catholyte reservoir.

In this embodiment, the cell is cyclic and the modified ferrocene species in the cathode can be repeatedly oxidised and reduced without having to be replaced.

An electricity loading device configured to load an electric power may also be provided in association with the fuel cell of the invention.

The fuel cell of the invention may comprise a reformer configured to convert available fuel precursor such as LPG, LNG, gasoline or low molecular weight alcohols into a fuel gas (e.g. hydrogen) through a steam reforming reaction. The cell may then comprise a fuel gas supply device configured to supply the reformed fuel gas to the anode chamber.

Preferred fuels include hydrogen; metal hydrides, for example borohydride which may act as a fuel itself or as a provider of hydrogen, low molecular weight alcohols, aldehydes and carboxylic acids, sugars and biofuels as well as LPG, LNG or gasoline.

Preferred oxidants include air, oxygen and peroxides

The anode in the redox fuel cell of the invention may for example be a hydrogen gas anode or a direct methanol anode; other low molecular weight alcohols such as ethanol, propanol, dipropylene glycol; ethylene glycol; also aldehydes formed from these and acid species such as formic acid, ethanoic acid etc. In addition the anode may be formed from a bio-fuel cell type system where a bacterial species consumes a fuel and either produces a mediator which is oxidized at the electrode, or the bacteria themselves are adsorbed at the electrode and directly donate electrons to the anode.

The cathode in the redox fuel cell of the invention may comprise as cathodic material carbon, gold, platinum, nickel, metal oxide species. However, as a result of the advantageous catholyte of the present invention, the use of such cathodes is not necessary to achieve satisfactory power output. Thus, the preferred cathodic materials include carbon, nickel, titanium and other metals inert in the specific catholyte and metal oxide or sulphide. One preferable material for the cathodes is reticulated vitreous carbon or carbon fibre based electrodes such as carbon felt. Another is nickel foam or mesh, or titanium foam or mesh. The cathodic material may be constructed from a fine dispersion of particulate cathodic material, the particulate dispersion being held together by a suitable adhesive, or by a proton conducting polymeric material. The cathode is designed to create maximum flow of catholyte solution to the cathode surface. Thus it may consist of shaped flow regulators or a three dimensional electrode; the liquid flow may be managed in a flow-by arrangement where there is a liquid channel adjacent to the electrode, or in the case of the three dimensional electrode, where the liquid is forced to flow through the electrode. It is intended that the surface of the electrode is also the electrocatalyst, but it may be beneficial to adhere the electrocatalyst in the form of deposited particles on the surface of the electrode.

The modified ferrocene species flowing in solution in the cathode chamber in operation of the cell is used in the invention as a mediator which acts as an electron sink for electrons formed during the fuel cell reaction. Following this reduction of the mediator, it is reoxidised by the catalyst reacting with the oxidant.

The modified ferrocene species, and any catalyst redox couple, utilised in the fuel cell of the invention should be non-volatile, and be preferably soluble in aqueous solvent. Preferred catalyst couple species should react with the oxidant at a rate effective to generate a useful current in the electrical circuit of the fuel cell, and react with the oxidant such that water is the ultimate end product of the reaction.

The fuel cell of the invention requires the presence of at least about 0.0001 M of a modified ferrocene species in the catholyte solution. However, catalyst redox couples should be included in the catholyte solution in addition to the modified ferrocene species. There are many suitable examples of such catalyst redox couples, including ligated transition metal complexes and polyoxometallate species, and combinations thereof. Specific examples of polyoxometallate catalyst species which are useful in the fuel cell of the present invention are disclosed in WO 2007/110 663. Specific examples of suitable transition metals ions which can form such complexes include manganese (II - V), iron (I - IV), copper (I - III), cobalt (I - III), nickel (I - III), chromium (II - VII), titanium (II - IV), tungsten (IV - VI), vanadium (II - V) and molybdenum (II - VI). Ligands for ligated transition metal complexes can contain carbon, hydrogen, oxygen, nitrogen, sulphur, halides and/or phosphorus.

Alternative catalysts which may be useful in the present invention are complexes of multidentate N-donor ligands. Such ligands are described in WO 2008/009 993 and in WO 2009/093 080 WO 2009/093 082 and may be coordinated with any suitable metal or metals, for example transition metals. Examples of such N-donor ligands may comprise one or more pyridine substituents and be selected from N4Py and derivatives thereof, pydien or derivatives thereof, and trilen and tpen and derivatives thereof. Iron complexes of these example N-donors are found to be effective catalysts for the oxidation of redox mediators in fuel cell systems.

Various aspects of the present invention will now be more particularly described with reference to the following figure which illustrate embodiments of the present invention:
Figure 1 illustrates a schematic view of the cathode compartment of a fuel cell in accordance with the present invention.
Figure 2 shows a reaction scheme for the synthesis of a selection of bridged ferrocene species of the present invention.
Figure 3 shows a cyclic voltammogram of the bridged ferrocene species 1'-3,3'-[3₂]-ferrocenophane-4,5'-disulfonic acid.
Figure 4 shows a UV-Vis spectrum of 1,1'-bis(sulphonato)-ferrocene diammonium salt.
Figure 5 shows a UV-Vis spectrum of 1'-3,3'-[3₂]-ferrocenophane-4,5'-disulfonic acid.
Figure 6 shows a polarization curve of a catholyte solution in accordance with the present invention.

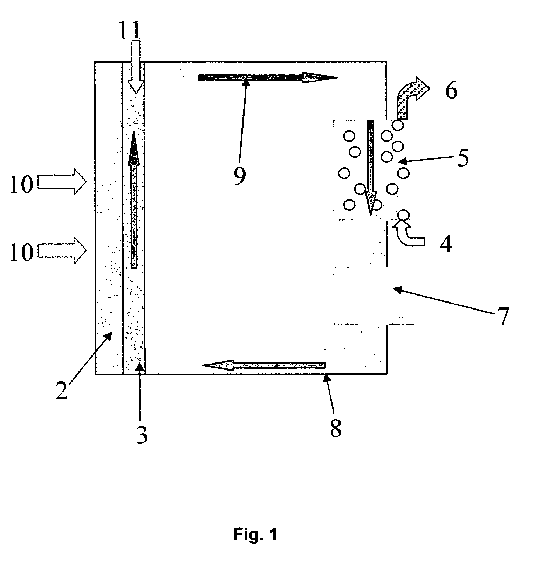

Referring to Fig. 1, there is shown the cathode side of fuel cell 1 in accordance with the invention comprising a polymer electrolyte membrane 2 separating an anode (not shown) from cathode 3. Cathode 3 comprises in this diagram reticulated carbon and is therefore porous. Polymer electrolyte membrane 2 comprises cation selective Nafion 112 membrane through which protons generated by the (optionally catalytic) oxidation of fuel gas (in this case hydrogen) in the anode chamber pass in operation of the cell. Electrons 11 generated at the anode by the oxidation of fuel gas flow in an electrical circuit (not shown) and are returned to cathode 3. Fuel gas (in this case hydrogen) is supplied to the fuel gas passage of the anode chamber (not shown), while the oxidant (in this case air) is supplied to oxidant inlet 4 of cathode gas reaction chamber 5. Cathode gas reaction chamber 5 (the catalyst reoxidation zone) is provided with exhaust 6, through which the by-products of the fuel cell reaction (eg water and heat) can be discharged.

A catholyte solution comprising a catalyst and the oxidised form of the modified ferrocene species is supplied in operation of the cell from catholyte reservoir 7 into the cathode inlet channel 8. The catholyte passes into reticulated carbon cathode 3, which is situated adjacent membrane 2. As the catholyte passes through cathode 3, the modified ferrocene species and catalyst are reduced and are then returned to cathode gas reaction chamber 5 via cathode outlet channel 9.

Due to the advantageous composition of the catholyte of the present invention, reoxidation of the modified ferrocene species and the catalyst occurs very rapidly, which allows the fuel cell to produce a higher sustainable current than with catholytes of the prior art.

The following non-limiting examples describe the synthesis of a selection of bridged ferrocenes.

### Example 1

### General Synthesis of [3ₙ]-Ferrocenophanes

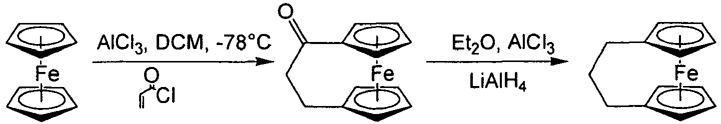

Procedure reported by T. D. Turbitt and W. E. Watts in J. Organomet. Chem. 1972, 46, 109.

### (a) Synthesis of [3ₙ]-ferrocenophan-1-ones

Ferrocene derivative (1 *equiv*.) was dissolved in anhydrous DCM and cooled to -78°C. Once at temperature the mixture was treated with AlCl₃ (1 *equiv*.) in small additions. Acryloyl chloride (1 equiv.) was dissolved in anhydrous DCM and added dropwise to the ferrocene mixture over 1 hr, maintaining the temperature at -78°C. The mixture was stirred at this temperature for a further 4-6 hrs before being quenched with ice-water, before being treated with TiCl₃ (12% in HCl) and extracted with DCM. The organic extracts were combined, dried over MgSO₄, filtered and the solvent removed *in vacuo* yielding a dark solid. Purification was performed on silica gel, elution with ligroin recovers starting material, whilst elution with ligroin/Et₂O (3/1 *vlv*) recovers the ferrocene-ketone product.

### (b) Reduction of [3ₙ]-ferrocenophan-1-ones to form [3ₙ]-ferrocenophanes

LiAlH₄ (2 *equiv*.) under nitrogen was suspended in anhydrous Et₂O and cooled to 0°C before AlCl₃ (2 *equiv*.) was added stepwise, maintaining the temperature. The mixture was then treated dropwise with ferrocenophan-1-one derivative (1 *equiv.*) dissolved in anhydrous DCM. The mixture was stirred at room temperature until consumption of the starting material was confirmed by tlc, typically 30-60 mins. The mixture was slowly quenched with ice water and filtered through celite to remove inorganic residues, before the product was extracted with Et₂O. The organic layers were combined, dried over MgSO₄, filtered and the solvent removed *in vacuo* typically yielding a bright yellow solid. If necessary the product was purified on silica gel eluted with ligroin.

### Example 2

### General Procedure for the Sulfonation of [3ₙ]-Ferrocenophanes

Synthetic protocol based on previously reported synthetic procedures in J. Am. Chem. Soc., 1958, 692.

The ferrocene derivative (1 *equiv.*) was suspended in acetic anhydride and treated dropwise with chlorosulfonic acid (2.1 *equiv*.). Addition of the chlorosulfonic acid causes an elevation of reaction temperature to around 40°C. The mixture was allowed to stir at RT, for a minimum of overnight, visibly changing colour to a dark green slurry. The mixture was quenched over ice before being neutralized with NaOH and the aqueous solution washed with Et₂O until the washings were colourless. The mixture was acidified with H₂SO₄ until all sodium acetate had been consumed forming acetic acid, ca. pH 3. Any solids were removed by filtration and discarded. The product was extracted into CH₃CN (sodium sulfate in solution creates a biphasic layer with acetonitrile and water which are usually miscible). The solvent was removed *in vacuo* yielding a dark yellow solid. Treatment with Ba(OH)₂ followed by passing through celite and a cation exchange column can be performed to remove traces of sodium sulfate.

### Example 3

### Synthesis of [3₁]-Ferrocenophan-1-one, 1

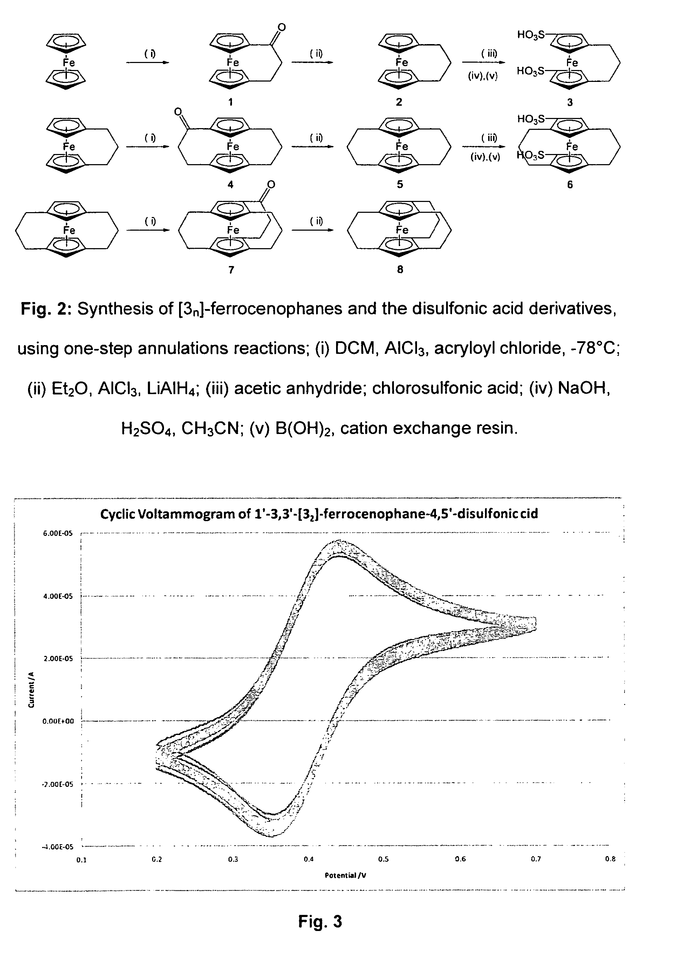

Following the general procedure in Example 1(a) and referring to Fig. 2.

Ferrocene (200 g, 1.05 moles) in DCM (**4** L), treated with AlCl₃ (**144** g, 1.06 moles) and arcyloyl chloride (100 g, 1.06 moles) yielded **1** (138 g, 55%) as a red/orange solid. ¹H NMR (200 MHz, CDCl₃): δ 4.90 (2H, broad, H²-Cp¹), 4.65 (2H, broad, H²-Cp²), 4.40 (2H, boad, H²-Cp 1), 4.05 (2H, broad, H³-Cp²), 3.00 (4H, broad, -CH₂-α, γ). MSES⁺: *m*/*z* 240.0 [M]⁺.

### Example 4

### Synthesis of [3₁]-Ferrocenophane, 2

Following the general procedure in Example 1(b) and referring to Fig. 2.
**1** (150 g, 0.56 moles) treated with AlCl₃ (110 g, 0.81 moles) and LiAlH₄ (32 g, 0.83 moles) in Et₂O (2 L) yielded **2** (125 g, 98%). ¹H NMR (500 MHz, CDCl₃): δ 3.90 (4H, d, H³-Cp), 3.85 (4H, d, H²-Cp), 1.90 (2H, m, β-CH₂), 1.80 (4H, m, α/γ-CH₂). MSES⁺: *m*/*z* 226.1 [M]⁺.

### Example 5

### Synthesis of [3₁]-Ferrocenophane Disulfonic Acid, 3

Following the general procedure in Example 2 and referring to Fig. 2.
**2** (1.75 g, 7.7 mmol) treated with chlorosulfonic acid (1.1 mL, 16.5 mmol) in acetic anhydride (35 mL) yielded a crude mixture of multiple α/α'-α/β'-etc.-isomers. Similar results have been previously reported in J. Am. Chem. Soc., 1957, 79, 2748.

### Example 6

### Synthesis of 1,1'-[3₁]-Ferrocenophane-3,3'-trimethyl-1-one, 4

Following the general procedure in Example 1(a) and referring to Fig. 2.
**2** (200 g, 0.88 moles) in DCM (4 L) was treated with AlCl₃ (120 g, 0.88 moles) and acryloyl chloride (98 g, 1.04 moles) recovered 2 (50%) as well as yielding **4** (100 g, 40%) as an orange oily solid. ¹H NMR (500 MHz, CDCl₃): δ 4.85 (1H, s, H²-Cp¹), 4.60 (1H, s, H²-Cp²), 4.55 (1H, d, H⁵-Cp¹), 4.45 (1H, d, H⁴-Cp¹), 4.20 (1H, d, H⁵-Cp²), 3.75 (1H, d, H⁴-Cp²), 3.20 - 1.60 (10H, multiple signals, H-alkyl). R_{f} = 0.4 (silica gel; Et₂O/ligoin, 1/1, *v*/*v*). MSES⁺: *m*/*z* 303.0 [M + Na]⁺; 335.0 [M + Na + MeOH]⁺; 582.7 [2M + Na]⁺. R_{f} = 0.16 (silica gel; ligroin/Et₂O 75/25).

### Example 7

### Synthesis of 1,1'-3,3'-[3₂]-Ferrocenophane, 5

Following the general procedure in Example 1(b) and referring to Fig. 2.
**4** (2.5 g, 9.0 mmol) in anhydrous Et₂O (200 mL) treated with AlCl₃ (1.2 g, 9.0 mmol) and LiAlH₄ (350 mg, 9.0 mmol) yielding **5** a yellow/orange solid (2.4 g, 99%). ¹H NMR (500 MHz, CDCl₃): δ 3.90 (4H, s, H⁴-Cp, H⁵-Cp), 3.80 (2H, s, H²-Cp), 2.00 (4H, broad, CH₂-β), 1.70 (8H, broad, CH₂-αγ). R_{f} = 0.9 (silica gel; Et₂O/ligoin, 1/1, *vlv*). MSES⁺: *m*/*z* 266.1 [M]⁺.

### Example 8

### Synthesis of 1,1'-3,3'-[3₂]-Ferrocenophane-4,5'-disulfonic Acid, 6

Following the general procedure in Example 2 and referring to Fig. 2.
**5** (200 g, 0.76 moles) with chlorosulfonic acid (189 g, 1.6 moles) in acetic acnhydride (2.5 L) gave **6** (100 g, 31%). ¹H NMR (300 MHz, D₂O): δ 4.50 (2H, s, H⁴-Cp¹, H⁵-Cp²), 4.15 (2H, H²-Cp¹, H²-Cp²), 2.20 (8H, m, alkyl), 1.70 (4H, m, alkyl). MSES⁻: *m*/*z* 212.3 [M - 2H]²⁻; 424.9 [M - 2H]⁻; 447 [M - 2H + Na]⁻.

### Example 9

### Synthesis of 1,1'-3,3'-[3₂]-Ferrocenophane-4,4'-trimethyl-1-one, 7

Following the general procedure in Example 1(a) and referring to Fig. 2.
**5** (2.0 g, 7.5 mmol) was dissolved in anhydrous DCM (150 mL) and cooled to - 78°C. The mixture was treated with AlCl₃ (1.0 g, 7.5 mmol) followed by dropwise addition over 1 hr of acyloyl chloride (0.6 mL, 7.6 mmol) dissolved in anhydrous DCM (30 mL). The mixture was stirred vigorously at -78°C for a further 6 hrs. The mixture was allowed to warm to ambient temperature before being quenched with water. The crude material was extracted into DCM with treating of the separation phases with TiCl₃ (1 - 2 mL of 12% in HCl). The organic phase was retained, dried over MgSO₄, filtered and the solvent removed *in vacuo.* Purification was performed on silica gel; gradient elution from ligroin to ligroin/diethyl ether (75/25 v/v). The product **7** was isolated as an orange solid (260 mg, 11 %) along with a substantial quantity of **5** (558 mg, 28%). ¹H NMR (500 MHz, CDCl₃): δ 4.20 (1H, s, H¹-Cp¹), 3.85 (1H, s, H²-Cp¹), 3.65 (2H, m, H¹-Cp², H²-Cp²), 2.00 (16H, broad multiplet, H-alkyl). R_{f} = 0.2 (silica gel; ligroin/Et₂O 75/25).

### Example 10

### Synthesis of [3₃]-Ferrocenophane, 8

Following the general procedure in Example 1(b) and referring to Fig. 2.
**7** (260 mg, 0.81 mmol) was treated with AlCl₃ (220 mg, 1.65 mmol) and LiAlH₄ (60 mg, 1.57 mmol) in anhydrous diethyl ether (110 mL) yielding a bright yellow solid **8** (187 mg, 76%). R_{f} = 0.9 (silica gel; ligroin/Et₂O 4/1 *vlv*).

### Example 11

### Synthesis of [3₁]-Ferrocenophan-1-ol, 9

1 (200 mg, 0.85 mmol) was dissolved in anhydrous Et₂O (30 mL) and cooled to 0°C. The mixture was then treated with LiAlH₄ (52 mg, 1.37 mmol) at 0°C and allowed to slowly warm to ambient temperature. The mixture is visibly observed to change colour. After 1 hour the mixture was quenched with distilled water [Caution! LiAlH₄ reacts violently with water liberating extremely flammable gases.]. The product **9** was extracted into Et₂O, dried over MgSO₄, filtered and the solvent evaporated *in vacuo* yielding a bright yellow solid (187 mg, 97%). MS(ES+): *m*/*z* 242.1 [M]⁺.

The performance of the catholyte of the present invention is described in the following examples.

### Example 12

A standard three electrode cell having (a) a 0.5 cm² glassy carbon electrode, (b) a reference calomel electrode (SCE) with a luggin capillary placed with the end about 2 mm away from the electrode, and (c) a platinum counter electrode was set up.

A solution of 0.01 M 1'-3,3'-[3₂]-ferrocenophane-4,5'-disulfonic acid in 0.1 M H₂SO₄/Na₂SO₄ at pH 2.5 was prepared. A cyclic voltammogram was recorded over 500 continuous cycles at 0.1 V/s whilst the solution was heated to at 75°C. During this time there was no decrease in current indicating that the ferrocene species is stable under these conditions. Furthermore, the CV displays reversible electrochemistry with a peak separation of 70 mV. Figure 3 shows an example voltammogram containing 100 sweeps with potentials given relative to the standard calomel reference electrode.

### Example 13

The relative stabilities of acidic solutions of the unbridged ferrocene species 1,1'-bis(sulphonato)-ferrocene diammonium salt and the bridged ferrocene species 1'-3,3'-[3₂]-ferrocenophane-4,5'-disulfonic acid were examined using UV-Vis spectroscopy. A 1cm quartz cuvette was used in a double beam instrument using water in the reference cuvette.

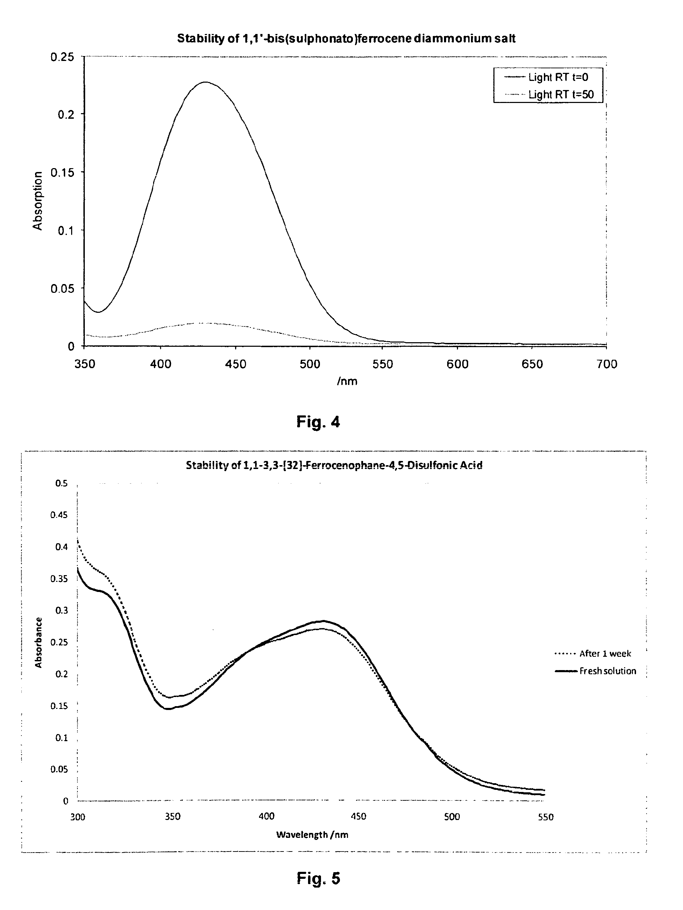

A 2.0 mM solution of 1,1'-bis(sulphonato)-ferrocene diammonium salt was prepared in 0.1 M glycine buffer solution at pH 2.5. A UV-Vis spectrum was recorded before and after an aliquot of this solution was allowed to stand in light at room temperature for a period of 50 minutes. A substantial decrease in absorbance was observed after this 50 minute period indicating that this unbridged ferrocene is unstable in this environment (Fig. 4).

A 1.1 mM solution of 1'-3,3'-[3₂]-ferrocenophane-4,5'-disulfonic acid was prepared in 0.1 M Na₂SO₄/H₂SO₄ buffer solution at pH 2.5. A UV-Vis spectrum was recorded before and after an aliquot of this solution was allowed to stand in light at room temperature for a period of 1 week. Even after this extended period of time, there was very little change in the recorded UV-Vis spectrum (Fig. 5), indicating that the introduction of bridging units greatly increase the stability of the ferrocene species under these conditions.

### Example 14

A catholyte solution of the present invention was prepared and its performance assessed using a redox cathode and a hydrogen anode. A commercial anode was used with a platinised gas diffusion layer from E-TEK (De Nora Deutschland), ½ MEA from Ion Power Inc using a 0.05 mm NafionRTM 25 (DuPont) membrane. A reticulated vitreous carbon (RVC) electrode was used for the cathode. The catholyte solution was pumped through this electrode before passing to a reservoir from where it was recirculated. The total liquid volume was 100 mL.

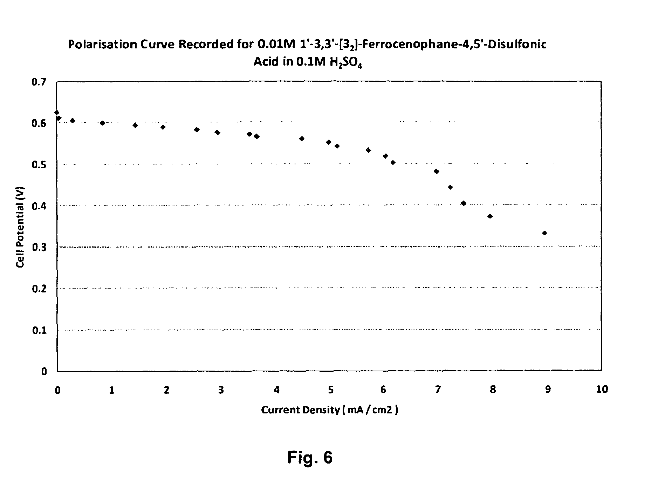

The catholyte solution tested contained 0.01 M 1'-3.3'-[3₂]-ferrocenophane-4,5'-disulfonic acid in 0.1 M H₂SO₄. The solution was partially oxidized in the fuel cell by applying a potential of 0.75 V for a period of 10 minutes. A polarization curve was then recorded and is shown in Fig. 6.

## Claims

1. A redox fuel cell comprising an anode and a cathode separated by an ion selective polymer electrolyte membrane; means for supplying a fuel to the anode region of the cell; means for supplying an oxidant to the cathode region of the cell; means for providing an electrical circuit between the anode and the cathode; a catholyte solution comprising at least one non-volatile catholyte component flowing in fluid communication with the cathode, the catholyte solution comprising a modified ferrocene species comprising at least one bridging unit between the cyclopentadienyl rings, the modified ferrocene species being at least partially reduced at the cathode in operation of the cell, and at least partially regenerated by reaction with the oxidant after such reduction at the cathode by direct reaction with the oxidant or by indirect reaction therewith using a redox catalyst catalysing the regeneration of the ferrocene mediator.

2. A fuel cell according to claim 1 wherein the modified ferrocene species is represented by the formula 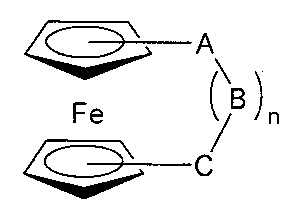 wherein:
A-(B)n-C together comprise a divalent heteroannular bridging group;
n is from 1 to 6; and
each B (B¹⁻⁶) may be the same or different.

3. A fuel cell according to claim 2 wherein the divalent heteroannular bridging group is selected from optionally substituted straight or branched chain C₁-C₂₀ alkylidene, C₂-C₂₀ alkenylidene, C₃-C₂₀ cycloalkylidene, C₆-C₂₀ arylidene, C₇-C₂₀ alkylarylidene, or C₇-C₂₀ arylalkylidene radicals, optionally containing one or more heteroatoms, the or each heteroatom when present optionally being selected from oxygen, nitrogen, phosphorus and sulphur.

4. A fuel cell according to claim 2 or claim 3 wherein:
a. A, B¹ - B⁶ and C are independently selected from carbon, sulphur, oxygen, nitrogen and phosphorus and from functional groups comprising one or more of those atoms; and/or
b. the number of bridging units (A-(B)ₙ-C) between the cyclopentadienyl rings is from 1 to 5 and the bridging units may be the same or different; and/or
c. *n* is from 1 to 3, optionally from 1 to 2; and/or
d. the or each bridging unit A-(B)ₙ-C are the same or different, and -A-, -B¹-, -B²-, -B³-, -B⁴-, -B⁵-, -B⁶- and -C- are optionally independently selected from compatible combinations of substituted and unsubstituted, branched- and straight-chain - (CH₂)-, -CH(alkyl)-, -C(alkyl)₂-, -CH(alkenyl)-, -C(alkenyl)₂-, - CH(alkynyl)-, -C(alkynyl)₂-, -CH(aryl)-, -CH(heteroaryl)-, -O-, - S-, -(NH)-, -N(alkyl)-, -CH(OH)-, -CH(O-alkyl)-, -C(=O)-, -C-O-C(=O)- or -O-C(=O)-OR-C(=O)-O-; and/or
e. the ferrocene bridging units A, B, and C, carry further substituent groups which are independently selected from hydrogen and from functional groups comprising halogen, hydroxy, amino, protonated amino, imino, nitro, cyano, acyl, acyloxy, sulphate, sulphonyl, sulphinyl, alkylamino, protonated alkylamino, quaternary alkylammonium, carboxy, carboxylic acid, ester, ether, amido, sulphonate, sulphonic acid, sulphonamide, phosphonic acid, phosphonate, phosphate, alkylsulphonyl, arylsulphonyl, alkoxycarbonyl, alkylsulphinyl, alkylthio, arylthio, alkyl, alkoxy, oxyester, oxyamido, aryl, arylamino, aryloxy, heterocycloalkyl, heteroaryl, (C2-C5)alkenyl, (C2-C5)alkynyl, azido, phenylsulphonyloxy or amino acid conjugates having the formula -CO-W-OH, where W is an amino acid , and from alkyl, alkenyl, aryl, cycloalkyl, alkaryl, alkenaryl, aralkyl, aralkenyl groups substituted with one ore more of the aforesaid functional groups; and/or
f. the or each bridging unit is further branched and/or extended at any bridging atom on any bridge by any suitable number of spacer and/or functional groups, the or each spacer group when present optionally being independently selected from straight or branched chain, substituted or unsubstituted alkyl, alkenyl, aryl, heteroaryl, cycloalkyl, alkaryl, alkenaryl, acetylene, and suitable combinations of the aforesaid units; and/or
g. at least one ferrocene site without a bridging substituent is independently substituted with hydrogen or with functional groups comprising halogen, hydroxy, amino, imino, nitro, cyano, acyl, acyloxy, sulphate, sulphonyl, sulphinyl, alkylamino, carboxy, carboxylic acid, ester, ether, amido, sulphonate, sulphonic acid, sulphonamide, phosphonic acid, phosphonate, phosphate, alkylsulphonyl, arylsulphonyl, alkoxycarbonyl, alkylsulphinyl, arylsulphinyl, alkylthio, arylthio, alkyl, alkoxy, oxyester, oxyamido, aryl, arylamino, aryloxy, heterocycloalkyl, heteroaryl, (C₂-C₅)alkenyl, (C₂-C₅)alkynyl, azido phenylsulphonyloxy or amino acid conjugates having the formula -CO-W-OH, where W is an amino acid, and from alkyl, alkenyl, aryl, cycloalkyl, alkaryl, alkenaryl, aralkyl, aralkenyl groups substituted with one or more of the aforesaid functional groups.

5. A fuel cell according to any one of claims 1 to 4 wherein the modified ferrocene species is selected from:

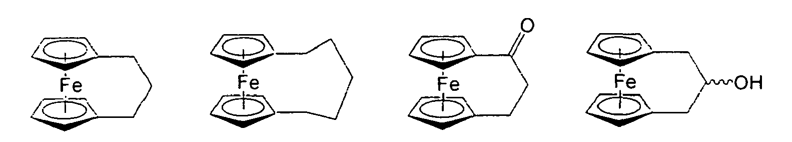

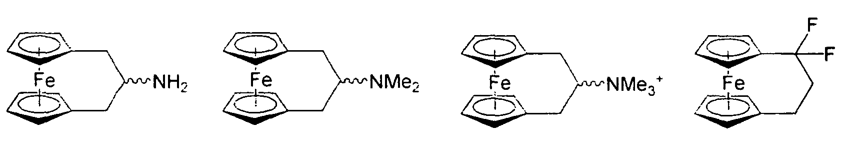

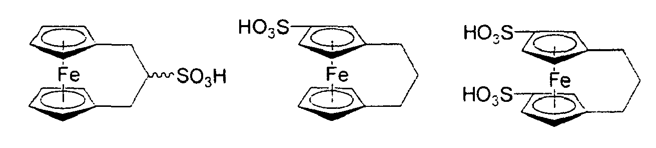

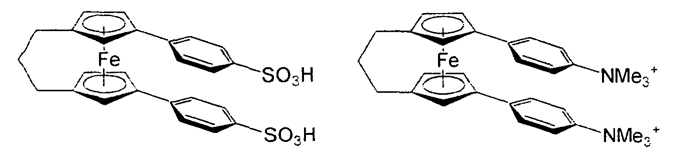

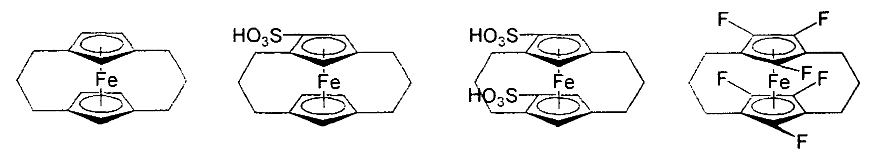

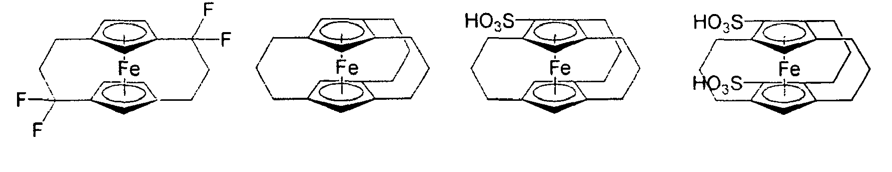

6. A redox fuel cell according to claims 1 to 5 wherein the ion selective polymer electrode membrane is cation and/or proton selective.

7. A redox fuel cell according to any one of claims 1 to 6 wherein the catholyte is acidic.

8. A redox fuel cell according to claim 7 wherein the modified ferrocene species is non-ionic or anionic in its oxidised form.

9. A redox fuel cell according to any one of Claims 1 to 5 wherein the ion selective polymer electrode membrane is anion selective.

10. A redox fuel cell according to Claim 9 wherein the catholyte is alkaline

11. A redox fuel cell according to Claim 10 wherein the modified ferrocene species is non-ionic or cationic in its reduced form.

12. A redox fuel cell according to any one of claims 1 to 11 wherein the ion selective polymer electrode membrane is a bi-membrane.

13. A redox fuel cell according to any one of claims 1 to 12 wherein the modified ferrocene species is present in the catholyte at a concentration of at least:
a. 0.0001M;
b. 0.001 M; or
c. 0.005M.

14. A redox fuel cell according to any one of claims 1 to 13 wherein the catholyte additionally comprises a catalyst redox species, optionally wherein:
a. the catalyst redox species is selected from ligated transition metal complexes, polyoxometallate species, and combinations thereof, optionally wherein the transition metal(s) in the transition metal complexes are selected from manganese (II - V), iron (I - IV), copper (I - III), cobalt (I - III), nickel (I - III), chromium (II - VII), titanium (II - IV), tungsten (IV - VI), vanadium (II - V) and molybdenum (II - VI); or
b. the catalyst redox species comprises a multidentate N-donor ligand, optionally wherein the N-donor ligand comprises one or more pyridine substituents, optionally wherein the catalyst redox species is an iron complex of N4Py, pydien, trilen or derivatives thereof.

15. A catholyte solution for use in a redox fuel cell according to any one of Claims 1 to 14.

## Patentansprüche

1. Redox-Brennstoffzelle, die Folgendes umfasst: eine Anode und eine Kathode, die durch eine ionenselektive Polymer-Elektrolyt-Membran getrennt sind; Mittel zur Versorgung des Anodenbereichs der Zelle mit einem Brennstoff; Mittel zur Versorgung des Kathodenbereichs der Zelle mit einem Oxidationsmittel; Mittel zur Bereitstellung eines Stromkreises zwischen der Anode und der Kathode; eine Katholytlösung, die mindestens eine nichtflüchtige Katholytkomponente umfasst, die in Flüssigkeitsverbindung mit der Kathode fließt, wobei die Katholytlösung eine modifizierte Ferrocen-Spezies umfasst, die mindestens eine überbrückende Einheit zwischen den Cyclopentadienylringen umfässt, wobei die modifizierte Ferrocen-Spezies zumindest teilweise an der Kathode beim Betrieb der Zelle reduziert wird und zumindest teilweise durch Reaktion mit dem Oxidationsmittel nach einer derartigen Reduktion an der Kathode durch direkte Reaktion mit dem Oxidationsmittel oder durch indirekte Reaktion damit unter Verwendung eines Redoxkatalysators, der die Regeneration der modifzierten Ferrocen-Spezieskatalysiert, regeneriert wird.

2. Brennstoffzelle nach Anspruch 1, worin die modifizierte Ferrocen-Spezies durch die folgende Formel dargestellt wird: 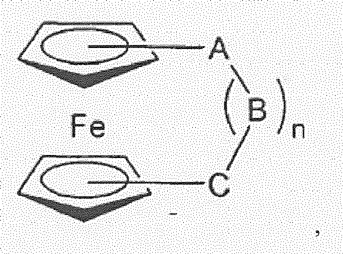 worin:
A-(B)n-C zusammen eine zweiwertige heteroannulare überbrückende Gruppe umfassen;
n von 1 bis 6 beträgt; und
jedes B (B¹⁻⁶) gleich oder verschieden sein kann.

3. Brennstoffzelle nach Anspruch 2, worin die zweiwertige heteroannulare überbrückende Gruppe aus Folgenden ausgewählt ist: optional substituierten gerad-oder verzweigtkettigen C₁-C₂₀-Alkyliden-, C₂-C₂₀-Alkenyliden-, C₃-C₂₀-Cycloalkyliden-, C₆-C₂₀-Aryliden-, C₇-C₂₀-Alkylaryliden- oder C₇-C₂₀-Arylalkylidenresten, die optional ein oder mehrere Heteroatome enthalten, wobei das öder jedes Heteroatom, wenn vorhanden, optional aus Sauerstoff, Stickstoff, Phosphor und Schwefel ausgewählt ist.

4. Brennstoffzelle nach Anspruch 2 oder Anspruch 3, worin:
a. A, B¹-B⁶ und C unabhängig aus Kohlenstoff, Schwefel, Sauerstoff, Stickstoff und Phosphor und aus funktionellen Gruppen, die ein oder mehrere dieser Atome umfassen, ausgewählt sind; und/oder
b. die Anzahl an überbrückenden Einheiten (A-(B)ₙ-C) zwischen den Cyclopentadienylringen von 1 bis 5 beträgt und die überbrückenden Einheiten gleich oder verschieden sein können; und/oder
c. n von 1 bis 3, optional von 1 bis 2 beträgt; und/oder
d. die oder jede überbrückende Einheit A-(B)ₙ-C gleich oder verschieden sind und -A-, -B¹-, -B²-, -B³-, -B⁴-, -B⁵-, -B⁶- und -C- optional unabhängig aus vereinbaren Kombinationen der Folgenden ausgewählt sind: substituiertem und unsubstituiertem, verzweigt-und geradkettigem-(CH₂)-,-CH(Alkyl)-, -C(Alkyl)₂-, -CH(Alkenyl)-, -C(Alkenyl)₂-, -CH(Alkinyl)-, -C(Alkinyl)₂-, -CH(Aryl)-, -CH(Heteroaryl)-, -O-, -S-, -(N-H)-, -N(Alkyl)-, -CH(OH)-, -CH(O-Alkyl)-, -C(=O)-, -C-O-C(=O)- oder -O-C(=O)-OR-C(=O)-O-; und/oder
e. die Ferrocen-überbrückenden Einheiten A, B und C weitere Substituentengruppen tragen, die unabhängig aus Folgenden ausgewählt sind: Wasserstoff und funktionellen Gruppen, die Folgende umfassen:
Halogen, Hydroxy, Amino, protoniertes Amino, Imino, Nitro, Cyano, Acryl, Acyloxy, Sulfat, Sulfonyl, Sulfinyl, Alkylamino, protoniertes Alkylamino, quartäres Alkylammonium, Carboxy, Carbonsäure, Ester, Ether, Amido, Sulfonat, Sulfonsäure, Sulfonamid, Phosphonsäure, Phosphonat, Phosphat, Alkylsulfonyl, Arylsulfonyl, Alkoxycarbonyl, Alkylsulfinyl, Alkylthio, Arylthio, Alkyl, Alkoxy, Oxyester, Oxyamido, Aryl, Arylamino, Aryloxy, Heterocycloalkyl, Heteroaryl, (C2-C5)-Alkenyl, (C2-C5)-Alkinyl, Azido, Phenylsulfonyloxy oder Aminosäurekonjugate, die die Formel-CO-W-OH aufweisen, wobei W eine Aminosäure ist, und aus Alkyl-, Alkenyl-, Acryl-, Cycloalkyl-, Alkaryl-, Alkenaryl-, Aralkyl-, Aralkenylgruppen, die mit einer oder mehreren der vorstehend benannten funktionellen Gruppen substituiertsind; und/oder
f. die oder jede überbrückende Einheit weiter verzweigt und/oder erweitert ist anjedwedem überbrückenden Atom an jedweder Brücke durch eine jedwede geeignete Anzahl von Spacer- und/oder funktionellen Gruppen, wobei die oder jede Spacer-Gruppe, wenn vorhanden, optional unabhängig aus Folgenden ausgewählt ist: gerad-oder verzweigtkettigem, substituiertem oder unsubstituiertem Alkyl, Alkenyl, Aryl, Heteroaryl, Cycloalkyl, Alkaryl, Alkenaryl, Acetylen und geeigneten Kombinationen der vorstehend benannten Einheiten; und/oder
g. mindestens eine Ferrocen-Stelle ohne einen überbrückenden Substituenten unabhängig mit Folgenden substituiert ist: Wasserstoff oder funktionellen Gruppen, die Folgende umfassen: Halogen, Hydroxy, Amino, Imino, Nitro, Cyano, Acyl, Acyloxy, Sulfat, Sulfonyl, Sulfinyl, Alkylamino, Carboxy, Carbonsäure, Ester, Ether, Amido, Sulfonat, Sulfonsäure, Sulfonamid, Phosphonsäure, Phosphonat, Phosphat, Alkylsulfonyl, Arylsulfonyl, Alkoxycarbonyl, Alkylsulfinyl, Arylsulfinyl, Alkylthio, Arylthio, Alkyl, Alkoxy, Oxyester, Oxyamido, Aryl; Arylamino, Aryloxy, Heterocycloalkyl, Heteroaryl, (C₂-C₅)-Alkenyl, (C₂-C₅)-Alkinyl, Azido Phenylsulfonyloxy oder Aminosäurekonjugate, die die Formel =CO-W-OH aufweisen, wobei W eine Aminosäure ist, und aus Alkyl-, Alkenyl-, Aryl-, Cycloalkyl-, Alkaryl-, Alkenaryl-, Aralkyl-, Aralkenylgruppen, die mit einer oder mehreren der vorstehend benannten funktionellen Gruppen substituiert sind.

5. Brennstoffzelle nach einem der Ansprüche 1 bis 4, worin die modifizierte Ferrocen-Spezies aus Folgenden ausgewählt ist:

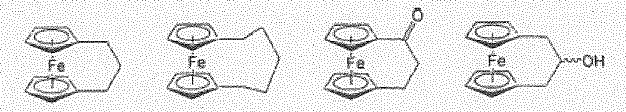

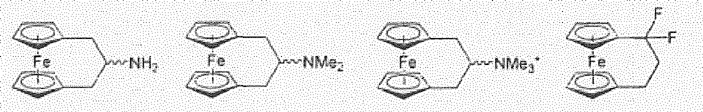

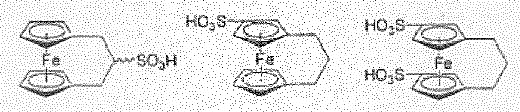

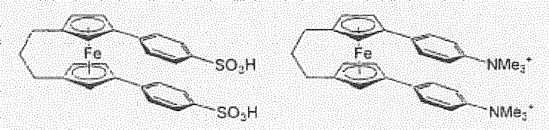

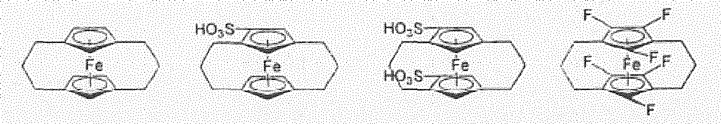

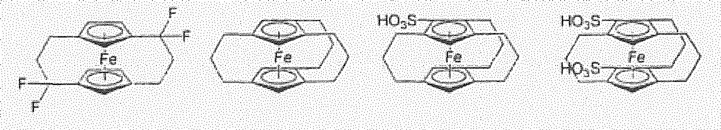

6. Redox-Brennstoffzelle nach den Ansprüchen 1 bis 5, worin die ionenselektive Polymer-Elektroden-Membrankationen-und/oder protonenselektiv ist.

7. Redox-Brennstoffzelle nach einem der Ansprüche 1 bis 6, worin der Katholyt sauer ist.

8. Redox-Brennstoffzelle nach Anspruch 7, worin die modifizierte Ferrocen-Spezies nichtionisch oder anionisch in ihrer oxidierten Form ist.

9. Redox-Brennstoffzelle nach einem der Ansprüche 1 bis 5, worin die ionenselektive Polymer-Elektroden-Membran anionenselektiv ist.

10. Redox Brennstoffzelle nach Anspruch 9, worin der Katholyt alkalisch ist.

11. Redox-Brennstoffzelle nach Anspruch 10, worin die modifizierte Ferrocen-Spezies nichtionisch oder kationisch in ihrer reduzierten Form ist.

12. Redox-Brennstoffzelle nach einem der Ansprüche 1 bis 11, worin die ionenselektive Polymer-Elektroden-Membran eine Bimembran ist.

13. Redox-Brennstoffzelle nach einem der Ansprüche 1 bis 12, worin die modifizierte Ferrocen-Spezies in dem Katholyten bei einer Konzentration von mindestens:
a. 0,0001 M,
b. 0,001 M oder
c. 0,005 M
vorliegt.

14. Redox-Brennstoffzelle nach einem der Ansprüche 1 bis 13, worin der Katholyt zusätzlich eine Katalysator-Redox-Spezies umfasst, worin optional:
a. die Katalysator-Redox-Spezies aus gebundenen Übergangsmetallkomplexen, Polyoxometallat-Spezies und Kombinationen davon ausgewählt ist, worin optional die/das Übergangsmetall(e) in den Übergangsmetallkomplexen aus Mangan (II-V), Eisen (I-IV), Kupfer (I-III), Cobalt (I-III), Nickel (I-III), Chrom (II-VII), Titan (II-IV), Wolfram (IV-VI), Vanadium (II-V) und Molybdän (II-VI) ausgewählt sind; oder
b. die Katalysator-Redox-Spezies einen mehrzähnigen N-Donorliganden umfasst, worin optional der N-Donorligand einen oder mehrere Pyridinsubstituenten umfasst, worin optional die Katalysator-Redox-Spezies ein Eisenkomplex von N4Py, Pydien, Trilen oder Derivaten davon ist.

15. Katholytlösung zur Verwendung in einer Redox-Brennstoffzelle nach einem der Ansprüche 1 bis 14.

## Revendications

1. Pile à combustible redox comprenant une anode et une cathode séparées par une membrane électrolyte polymère sélective d'ions; un moyen d'apport d'un combustible à la région d'anode de la pile ; un moyen d'apport d'un oxydant à la région de cathode de la pile ; un moyen d'apport d'un circuit électrique entre l'anode et la cathode ; une solution catholyte comprenant au moins un composant catholyte non volatil s'écoulant en communication fluide avec la cathode, la solution catholyte comprenant une espèce de ferrocène modifié comprenant au moins un motif de pontage entre les cycles cyclopentadiényle, l'espèce de ferrocène modifié étant au moins partiellement réduite au niveau de la cathode lors du fonctionnement de la pile, et au moins partiellement régénérée par réaction avec l'oxydant après une telle réduction au niveau de la cathode par réaction directe avec l'oxydant ou par réaction indirecte avec celui-ci en utilisant un catalyseur d'oxydoréduction catalysant la régénération de l'espèce de ferrocène modifié.

2. Pile à combustible selon la revendication 1, dans laquelle l'espèce de ferrocène modifié est représentée par la formule 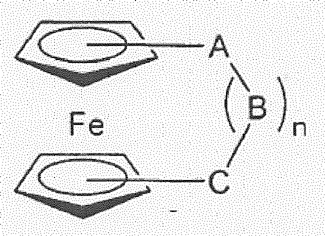 dans laquelle
A-(B)ₙ-C comprennent ensemble un groupement de pontage hétéro-annulaire divalent ;
n va de 1 à 6; et
chaque B (B¹⁻⁶) peut être identique ou différent.

3. Pile à combustible selon la revendication 2, dans laquelle le groupement de pontage hétéro-annulaire divalent est choisi parmi des radicaux C₁-C₂₀ alkylidène, C₂-C₂₀ alcénylidène, C₃-C₂₀ cycloalkylidène, C₆-C₂₀ arylidène, C₇-C₂₀ alkylarylidéne ou C₇-C₂₀ arylalkylidène, linéaires ou ramifiés et éventuellement substitués, contenant éventuellement un ou plusieurs hétéroatomes, le ou chaque hétéroatome, lorsqu'il est présent, étant éventuellement choisi parmi oxygène, azote, phosphore et soufre.

4. Pile à combustible selon la revendication 2 ou la revendication 3, dans laquelle :
a. A, B¹-B⁶ et C sont choisis indépendamment parmi carbone, soufre, oxygène, azote et phosphore, et parmi des groupements fonctionnels comprenant un ou plusieurs parmi ces atomes ; et/ou
b. le nombre de motifs de pontage (A-(B)ₙ-C) entre les cycles cyclopentadiényle va de 1 à 5 et les motifs de pontage peuvent être identiques ou différents ; et/ou
c. n va de 1 à 3, éventuellement de 1 à 2 ; et/ou
d. le ou chaque motif de pontage A-(B)ₙ-C est identique ou différent, et-A-,-B¹-, -B²-, -B³-, -B⁴-; -B⁵-, -B⁶-, et -C- sont éventuellement choisis indépendamment parmi des combinaisons compatibles de -(CH₂)-, -CH(alkyl)-, -C(alkyl)₂-, -CH(alcényl)-, -C(alcényl)₂-, -CH(alcynyl)-, -C(alcynyl)₂-, -CH(aryl)-, -CH(hétéroaryl)-, -O-, -S-, -(NH)-, -N(alkyl)-, -CH(OH)-, -CH(O-alkyl)-, -C(=O)-, -C-O-C(=O)- ou -O-C(=O)-OR-C(=O)-O- substitués et non substitués, à chaîne linéaire ou ramifiés ; et/ou
e. les motifs de pontage de ferrocène A, B et C, portent d'autres groupements substituants qui sont choisis indépendamment parmi hydrogène et parmi des groupements fonctionnels comprenant halogène, hydroxy, amino, amino protoné, imino, nitro, cyano, acyle, acyloxy, sulfate, sulfonyle, sulfinyle, alkylamino, alkylamino protoné, alkylammonium quaternaire, carboxy, acide carboxylique, ester, éther, amido, sulfonate, acide sulfonique, sulfonamide, acide phosphonique, phosphonate, phosphate, alkylsulfonyle, arylsulfonyle, alcoxycarbonyle, alkylsulfinyle, alkylthio, arylthio; alkyle, alcoxy, oxyester, oxyamido, aryle, arylamino, aryloxy, hétérocycloalkyle, hétéroaryle, (C2-C5)alcényle, (C₂-C₅)alcynyle, azido, phénylsulfonyloxy ou des conjugués d'acides aminés répondant à la formule -CO-W-OH, où W est un acide aminé, et des groupements alkyle, alcényle, aryle, cycloalkyle, alkaryle, alcénaryle, aralkyle, aralcényle substitués par un ou plusieurs parmi les groupements fonctionnels susmentionnés ; et/ou
f. le ou chaque motif de pontage est en outre ramifié et/ou étendu au niveau d'un atome de pontage quelconque sur un pont quelconque par un nombre convenable quelconque de groupements espaceurs et/ou fonctionnels, le ou chaque groupement espaceur, lorsqu'il est présent, étant éventuellement indépendamment choisi parmi alkyle, alcényle, aryle, hétéroaryle, cycloalkyle, alkaryle, alcénaryle, acétylène, à chaîne linéaire ou ramifiée, substitué ou non substitué, et des combinaisons convenables des motifs susmentionnés ; et/ou
g. au moins un site ferrocène sans substituant de pontage est substitué indépendamment par hydrogène ou par des groupements fonctionnels comprenant halogène, hydroxy, amino, imino, nitro, cyano, acyle, acyloxy, sulfate, sulfonyle, sulfinyle, alkylamino, carboxy, acide carboxylique, ester, éther, amido, sulfonate, acide sulfonique, sulfonamide, acide phosphonique, phosphonate, phosphate, alkylsulfonyle, arylsulfonyle, alcoxycarbonyle, alkylsulfinyle, arylsulfinyle, alkylthio, arylthio, alkyle, alcoxy, oxyester, oxyamido, aryle, arylamino, aryloxy, hétérocycloakyle, hétéroaryle, (C₂-C₅)alcényle, (C₂-C₅)alcynyle, azido, phénylsulfonyloxy ou des conjugués d'acides aminés répondant à la formule-CO-W-OH, où W est un acide aminé, et des groupements alkyle, alcényle, aryle, cycloalkyle, alkaryle, alcénaryle, aralkyle, aralcényle substitués par un ou plusieurs parmi les groupements fonctionnels susmentionnées.

5. Pile à combustible selon l'une quelconque des revendications 1 à 4, dans laquelle l'espèce de ferrocène modifié est choisie parmi :

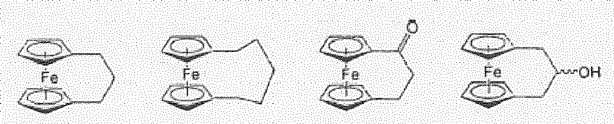

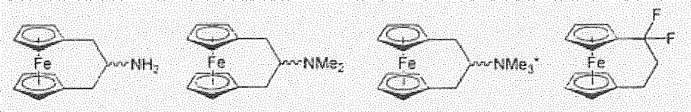

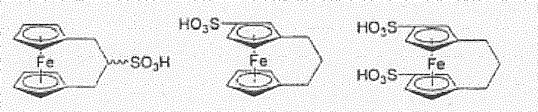

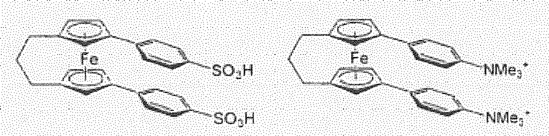

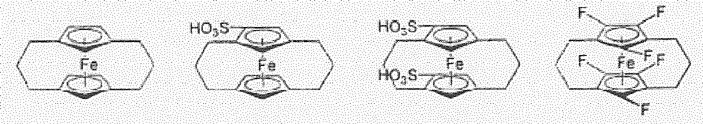

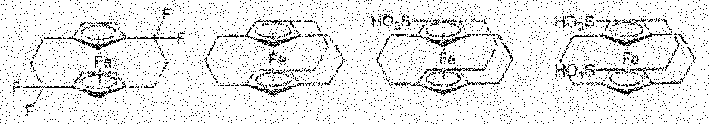

6. Pile à combustible redox selon les revendications 1 à 5, dans laquelle la membrane d'électrode polymère sélective d'ions est sélective des cations et/ou des protons.

7. Pile à combustible redox selon l'une quelconque des revendications 1 à 6, dans laquelle le catholyte est acide.

8. Pile à combustible redox selon la revendication 7, dans laquelle l'espèce de ferrocène modifié est non ionique ou anionique sous sa forme oxydée.

9. Pile à combustible redox selon l'une quelconque des revendications 1 à 5, dans laquelle la membrane d'électrode polymère sélective d'ions est sélective des anions.

10. Pile à combustible redox selon la revendication 9, dans laquelle le catholyte est alcalin.

11. Pile à combustible redox selon la revendication 10, dans laquelle l'espèce de ferrocène modifié est non ionique ou cationique sous sa forme réduite.

12. Pile à combustible redox selon l'une quelconque des revendications 1 à 11, dans laquelle la membrane d'électrode polymère sélective d'ions est une bi-membrane.

13. Pile à combustible redox selon l'une quelconque des revendications 1 à 12, dans laquelle l'espèce de ferrocène modifié est présente dans le catholyte selon une concentration d'au moins :
a. 0,0001M ;
b. 0,001M ; ou
c. 0,005M.

14. Pile à combustible redox selon l'une quelconque des revendications 1 à 13, dans laquelle le catholyte comprend en outre une espèce redox de catalyse, éventuellement où :
a. l'espèce redox de catalyse est choisie parmi les complexes de métaux de transition ligaturés, les espèces de polyoxométallate, et des combinaisons de ceux-ci, éventuellement où le ou les métaux de transition dans les complexes de métaux de transition sont choisis parmi le manganèse (II-V), le fer (I-IV), le cuivre (I-III), le cobalt (I-III), le nickel (I-III), le chrome (II-VII), le titane (II-IV), le tungstène (IV-VI), le vanadium (II-V) et le molybdène (II-VI) ; ou
b. l'espèce redox de catalyse contient un ligand donneur de N multidenté, éventuellement où le ligand donneur de N comprend un ou plusieurs substituants pyridine, éventuellement où l'espèce redox de catalyse est un complexe de fer de N4Py, pydiène, trilène ou des dérivés de ceux-ci.

15. Solution catholyte pour une utilisation dans une pile à combustible redox selon l'une quelconque des revendications 1 à 14.
